# EUROPÄISCHE PATENTSCHRIFT

(11) **EP 0 693 627 B1**
(45) Veröffentlichungstag und Bekanntmachung des Hinweises auf die Patenterteilung: **19.09.2001**
(21) Anmeldenummer: 95109735.1
(22) Anmeldetag: 22.06.1995
(51) Int. Cl.: F16B 4/00, F16L 3/233, B29C 61/06, B29C 65/68

(54) **Bausatz zum Befestigen von Verdrahtungssystemen und Leiterbündeln**
Assembly for tying wire systems and conductor bundles
Ensemble pour attacher systémes de fils et paquets de conducteurs

(30) Priorität: 12.07.1994 DE 9411270 U
(43) Veröffentlichungstag der Anmeldung: 24.01.1996
(73) Patentinhaber: DSG-Canusa GmbH & Co.KG, D-53340 Meckenheim (DE)
(72) Erfinder: Arenz, Helmut, D-55347 Alfter-Impekoven (DE)
(74) Vertreter: Grünecker, Kinkeldey, Stockmair & Schwanhäusser Anwaltssozietät

(56) Entgegenhaltungen:
- EP-A- 0 035 737
- EP-A- 0 074 280
- EP-A- 0 241 776
- DE-A- 3 929 449
- FR-A- 1 374 690
- FR-A- 2 437 088
- FR-A- 2 567 692
- US-A- 3 483 285

## Beschreibung

Die Erfindung betrifft einen Bausatz zum Befestigen von elektrischen Verdrahtungssystemen und elektrischen Leiterbündeln und dergleichen der in den Oberbegriffen der Ansprüche 1 und 2 angegebenen Gattung. Ein derartiger Bausatz ist aus der US-A-3,483,285 bekannt.

Aus der EP-A-0 035 737 ist eine längsgeteilte Kabelmuffe aus schrumpfbarem Material bekannt, welche eine schrumpfbare Manschette aufweist, die an ihren Enden wiederum mit Wülsten versehen ist, in welche längs verlaufende, nicht schrumpfbare Verstärkungsmittel in Form von Metalldrähten eingebettet sind. Ferner umfaßt die bekannte Kabelmuffe eine Verschlußschiene, welche hinterschnittene Nuten besitzt, in welche jeweils ein Wulst der Manschette aufnehmbar ist.

In jüngerer Zeit ist ein verstärktes Bedürfnis nach Hilfsmitteln aufgetreten, welche das Befestigen von Gegenständen ermöglichen bzw. erleichtern. Insbesondere ist ein solches Bedürfnis bei elektrischen Leitern und Leitungssystemen aufgetreten, da immer häufiger gewünscht wird, diese gesondert und unterscheidbar von anderen Leitern, Leitungssystemen oder gar Rohren zu befestigen.

So wird beispielsweise in jüngerer Zeit im Automobilbau verlangt, daß die zur Motorelektronik oder dergleichen gehörenden Verdrahtungssysteme übersichtlich und gesondert voneinander verlegt werden, um einen Leiterwirrwarr zu vermeiden, welcher Wartungs- und Reparaturarbeiten beeinträchtigen würde.

In gleicher Weise verlangen auch andere Verwender von Leitersystemen oder dergleichen nach Hilfsmitteln, um elektrische Leiter, Verdrahtungssysteme und Rohre, welche wiederum gegebenenfalls Leitersysteme aufnehmen können, übersichtlich, gesondert voneinander und jederzeit mit dem Auge verfolgbar befestigen zu können.

Das Bedürfnis nach Befestigungshilfsmitteln ist jedoch auch in vielen anderen Bereichen der Technik bzw. des täglichen Bedarfes anzutreffen, praktisch
überall, wo es darum geht, wenigstens zwei Bauteile aneinander oder in einer bestimmten Anordnung zueinander zu befestigen.

Der Erfindung liegt deshalb die Aufgabe zugrunde, einen vielfältig anwendbaren Bausatz zu schaffen, mit dessen Hilfe elektrische Verdrahtungssysteme und Leiterbündel befestigbar sind.

Diese Aufgabe wird erfindungsgemäß gelöst durch die Gegenstände der Ansprüche 1 und 2.

Der mit Hilfe des erfindungsgemäßen Bausatzes nach Anspruch 1 erzielbare technische Fortschritt ergibt sich in erster Linie daraus, daß mit seiner Hilfe Leiterbündel, wie Verdrahtungs-systeme, an vielfältigen Orten befestigt werden können. Soll z.B. ein Einzelleiter oder ein ganzes Leitersystem an einem bestimmten Ort befestigt werden, so wird das Befestigungsteil des Bausatzes an dem gewünschten Ort befestigt und wird das schrumpffähige Kunststoffband um den Leiter bzw. das Leitersystem herumgeschlungen. Die an den gegenüberliegenden Seitenkanten des Kunststoffbandes vorgesehenen Befestigungseinrichtungen werden an dem Befestigungsteil befestigt, wozu das Befestigungsteil mit geeigneten Einrichtungen versehen ist. Durch Schrumpfen vermindert das Band seine Ausdehnung beträchtlich und schrumpft gegen die zu befestigenden Gebilde in Richtung auf das Befestigungsteil. Nach Abschluß des Schrumpfvorganges liegt das geschrumpfte Band eng an dem zu haltenden bzw. zu befestigenden Gebilden an, wobei die beiden Befestigungseinrichtungen das Band mit dem Befestigungsteil verbinden.

Bevorzugte Ausführungsformen und weitere Ausgestaltungen der Erfindung sind in den Unteransprüchen angegeben.

Schrumpffähige Kunststoffbänder sind bereits bekannt, ebenso die Herstellung derselben. In der DE 38 03 318 C2 (DSG Schrumpfschlauch GmbH) ist die Herstellung schrumpffähiger Kunststoffbänder im Detail beschrieben, wobei jeweils zunächst ein schrumpffähiger Kunststoffschlauch aus einem vernetzbaren Polymeren hergestellt wird. Beispielsweise werden dazu Polymere auf PE-Basis oder PVDF-Basis oder aus Polyamid verwendet. Der Kristallitschmelzpunkt dieser Polymerwerkstoffe liegt in Abhängigkeit von den zu erwartenden Betriebstemperaturen zwischen 90 und 150 °C.

Die schrumpffähigen Schläuche werden strahlungsvernetzt und unter Wärmeeinwirkung entweder radial verstreckt, d.h. aufgeweitet, oder axial verstreckt, d.h. gelängt. Anschließend werden die verstreckten Schläuche axial getrennt, so daß aus einem Schlauch eine Folie entsteht. Bei Wärmezufuhr schrumpfen diese Folien entgegen ihrer Streckrichtung zurück, im wesentlichen auf ihre Abmessung vor dem Verstrecken.

Aus dem deutschen Gebrauchsmuster G 93 12 731.6 (DSG Schrumpfschlauch GmbH) ist ein schrumpffähiges Kunststoffband bekannt, welches in seinen beiden Randbereichen mit Einrichtungen zum wiederlösbaren, mechanischen Verbinden der Randbereiche versehen ist. Bei diesen bekannten Kunststoffbändern besteht wenigstens einer der Randbereiche aus einem anderen Werkstoff als der sich zwischen den beiden Randbereichen erstreckende Folienbereich des Kunststoffbandes.

Die Erfindung wird im folgenden anhand von Ausführungsbeispielen sowie unter Bezug auf die Zeichnung näher beschrieben. In dieser zeigt:
- Fig. 1: ein schrumpffähiges Band mit als Befestigungseinrichtungen ausgebildeten Außenkanten,
- Fig.1A: ein schrumpffähiges Band mit Außenkanten der in Fig. 1 dargestellten Gattung mit einem verdickten Mittelbereich 3,
- Fig. 1B: zwei schrumpffähige Bänder der in Fig. 1A dargestellten Gattung, die jedoch durch ein gemeinsames Mittelteil 3' miteinander verbunden sind,
- Fig.2: eine perspektivische Darstellung eines Befestigungsteils,
- Figuren 3 bis 13: schematische Darstellungen von Befestigungsteilen in unterschiedlichen Ausführungsformen und
- Figuren 14 bis 20: bevorzugte Anwendungsbeispiele des Bausatzes.

Das schrumpffähige Band 1 - im folgenden "Schrumpfband" genannt - ist an seinen einander gegenüberliegenden Außenkanten mit Befestigungseinrichtungen 2 versehen. Das Schrumpfband 1 ist bereits verstreckt und schrumpft bei Wärmezufuhr derart, daß die beiden einander gegenüberliegenden Außenkanten, an welchen die Befestigungseinrichtungen 2 ausgebildet sind, näher aneinander heranbewegt würden, wenn sie nicht festgehalten werden. Mithin gilt für alle im Rahmen dieser Erfindung beschriebenen Schrumpfbänder, daß sich als Folge des Schrumpfens die beiden einander gegenüberliegenden Außenkanten aufeinander zu bewegen würden, wenn sie nicht an einer solchen Bewegung gehindert werden.

Das Schrumpfband 1 besteht aus einem Polymeren, wie LDPE, LLDPE, Polyamid oder dergleichen. Wenigstens eine der beiden als Befestigungseinrichtungen 2 dienenden Außenkanten kann aus einem anderen Werkstoff bestehen, vorzugsweise einem Polymeren mit höherem Kristallitschmelzpunkt als der Werkstoff des Schrumpfbandes 1. Bevorzugte Polymere mit höherem Kristallitschmelzpunkt sind Polymere auf HDPE-Basis oder LLDPE-Basis oder PVDF-Basis oder Polyamidbasis.

Nach einer anderen bevorzugten Ausführungsform bestehen das Schrumpfband 1 sowie dessen beide Außenkanten, d.h. die beiden Befestigungsteile 2, aus ein und demselben Polymerwerkstoff.

Wie weiter unten noch näher ausgeführt wird, kann bei dem Bausatz nach der Erfindung die zum Schrumpfen des schrumpffähigen Bandes benötigte Wärme von den Außenkanten (Befestigungsteilen) so weitgehend ferngehalten werden, daß der Kristallitschmelzpunkt der Befestigungseinrichtungen 2 nicht erreicht wird.

Für den Bausatz nach der Erfindung sollte das Schrumpfband 1 ein Reckverhältnis vom 2- bis 10fachen, vorzugsweise vom 4-bis 6fachen, aufweisen.

Die Befestigungseinrichtungen 2 an den Außenkanten des Schrumpfbandes können durchaus unterschiedliche Querschnittsgestalten aufweisen. Außer der in den Figuren aus Gründen der Einfachheit bevorzugt dargestellten kreisförmigen Querschnittsgestalt können viereckige, dreieckige oder unregelmäßige Gestaltungen verwendet werden. Auch kann durchaus beispielsweise die linke Außenkante eine andere Querschnittsgestalt haben als die rechte Außenkante des Schrumpfbandes.

Die runden, viereckigen und dreieckigen Querschnittsgestalten der Außenkanten lassen sich durch Co-Extrusion zusammen mit dem Schrumpfband 1 herstellen.

Es ist auch möglich, die Schrumpfbänder ohne verstärkte Auβenkanten zu extrudieren, um sodann nachfolgend die Befestigungseinrichtungen 2 durch Kleben oder Schweißen an den einander gegenüberliegenden Außenkanten zu befestigen.

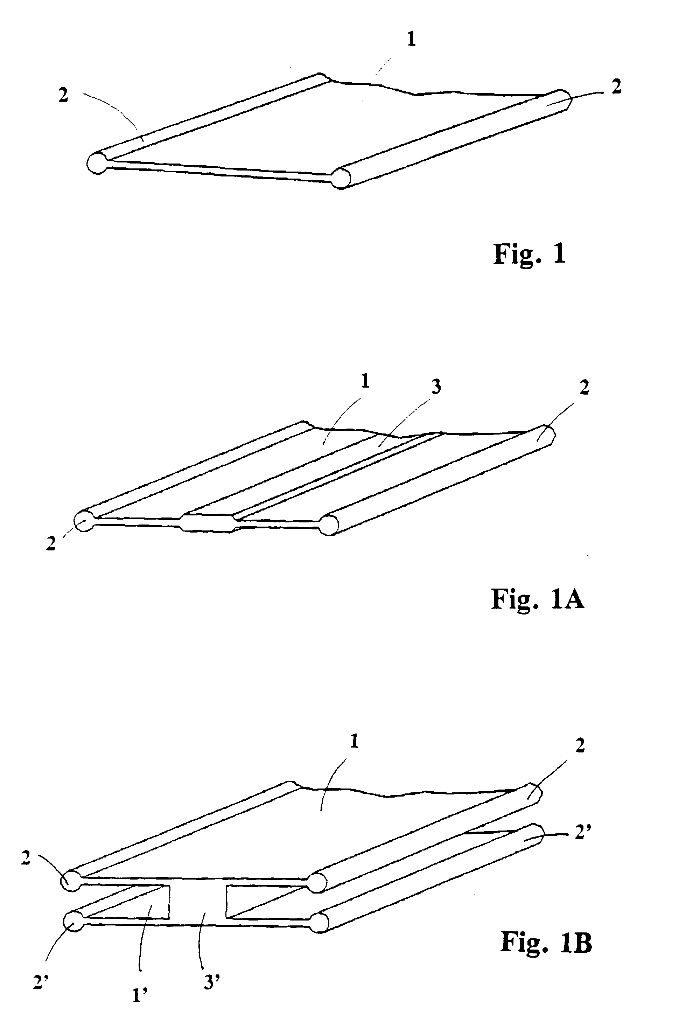

Die in den Figuren 1 bis 1B dargestellten Schrumpfbänder mit Befestigungseinrichtungen können je nach beabsichtiger Verwendung endlos als Rollenware oder in Fixlängen hergestellt werden. Ferner kann insbesondere das einfache Band gemäß Fig. 1 mit Ausstanzungen versehen hergestellt werden, wobei solche (nicht dargestellt) Ausstanzungen im zentralen Mittelbereich zwischen den Außenkanten, aber alternativ auch im Bereich der Außenkanten vorgesehen sein können. Im letzteren Fall sind dann die als Befestigungseinrichtungen 2 dienenden Außenkanten intermittierend ausgebildet.

Ein mit Befestigungseinrichtungen versehenes Schrumpfband 1 gemäß Fig. 1A weist einen nicht gereckten und folglich dickeren Mittelbereich 3 auf. Dieser Mittelbereich 3 kann bei der späteren Verwendung für Beschriftungen, aber auch zum Befestigen auf einem Untergrund verwendet werden.

Fig. 1B zeigt ein Doppelband, welches zwei Schrumpfbandbereiche 1, 1' und jeweils zwei entsprechende Außenkantenbereiche 2, 2' aufweist. Diese Schrumpfbandbereiche und die Außenkanten verlaufen jeweils parallel zueinander, wobei die beiden Schrumpfbänder mit Hilfe eines nicht gereckten, dicken Mittelbereiches 3' miteinander verbunden sind. Diese in Fig. 1B dargestellte Ausführungsform führt dazu, daß zu jeder Seite des Mittelbereiches 3' eine Kammer gebildet ist, die als Kabelkanal verwendet werden kann. Beispielsweise eignet sich die in Fig. 1B dargestellte Ausführungsform für zwei unterschiedlichen Zwecken dienende Rohrleitungen von Kfz-Klimaanlagen.

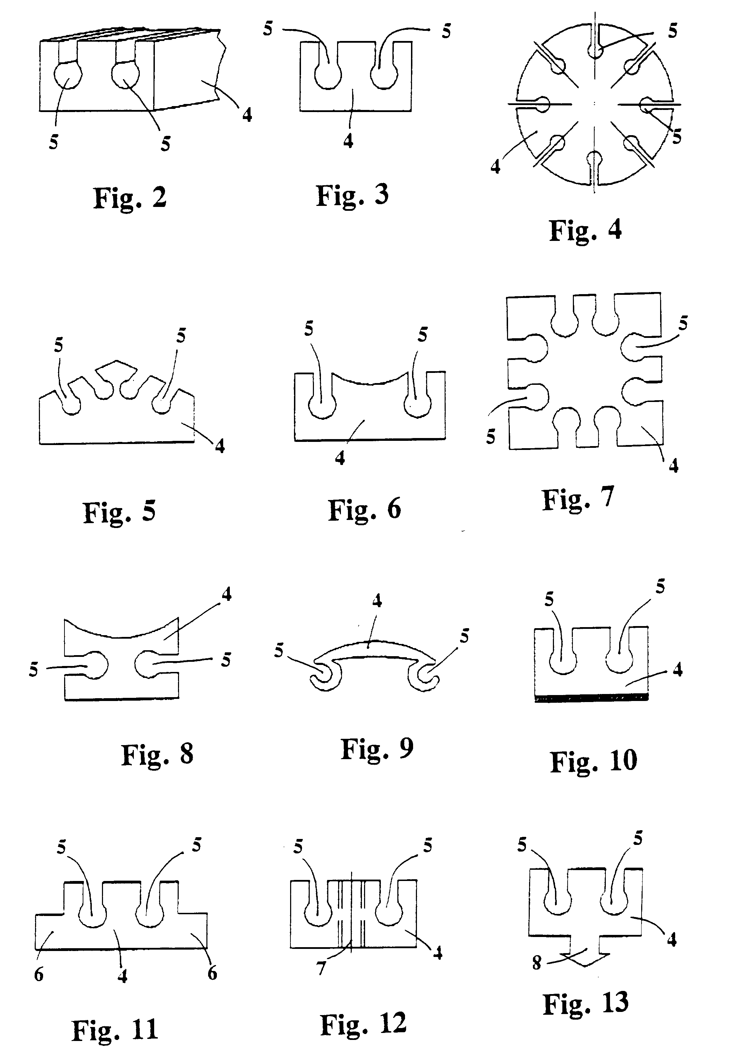

Das zweite Element des erfindungsgemäßen Bausatzes ist ein Befestigungsteil, von welchem in den Figuren 2 bis 13 eine Auswahl bevorzugter Ausführungsformen dargestellt ist. Diese Befestigungsteile, die durchgehend mit der Bezugsziffer 4 bezeichnet sind, können aus allen extrudierbaren Thermoplasten oder anderen geeigneten Kunststoffen bestehen. Bevorzugte Werkstoffe für die Befestigungsteile sind PA, LDPE, HDPE, PVC usw.. Ferner können Duroplaste und Elastomere verarbeitet werden. Die Werkstoffe für die Befestigungsteile müssen nicht in jedem Falle vernetzt sein. Für Sonderzwecke kann sich jedoch eine Vernetzung der Werkstoffe als vorteilhaft erweisen.

Die Befestigungsteile 4 gemäß Figuren 2 bis 13 weisen wenigstens zwei Halteeinrichtungen 5 auf, die derartig gestaltet und dimensioniert sind, daß sie mit einem der Befestigungseinrichtungen 2, die an den Schrumpfbändern 1 ausgebildet sind, in Klemmeingriff treten können.

In Fig. 2 ist perspektivisch ein Befestigungsteil 4 dargestellt, welches blockförmig gestaltet ist und zwei Halteeinrichtungen 5 aufweist, die parallel zueinander angeordnet sind. In den Figuren 2 bis 13 haben die Halteeinrichtungen 5 aus Gründen der einfacheren Darstellung einen im wesentlichen kreisförmigen Querschnitt. Es versteht sich jedoch, daß die Querschnittsgestalt der Halteeinrichtungen 5 an die jeweiligen Querschnittsgestalten der als Befestigungseinrichtungen 2 dienenden Außenkanten angepaßt sein können. Stets sind die Halteeinrichtungen 5 zu einer der Oberflächen des Befestigungsteils 4 geöffnet.

Fig. 3 zeigt schematisch eine Stirnansicht des in Fig. 2 dargestellten Befestigungsteils 4. Es ist zu erkennen, daß sich die beiden Halteeinrichtungen 5 von oben nach unten sackartig erweitern, so daß in jede der beiden Halteeinrichtungen 5 eine der als Befestigungseinrichtungen 2 dienenden Außenkanten einführbar und in derselben klemmend festhaltbar ist.

Gemäß Fig. 4 besitzt das Befestigungsteil 4 eine kreisförmige Gestalt mit einer Vielzahl von über den Umfang angeordneten Halteeinrichtungen 5. Wie auch bei den Figuren 5 und 7, welche gleichfalls mehr als zwei Halteeinrichtungen 5 aufweisen, sind in Fig. 4 nur zwei der Halteeinrichtungen mit der Bezugsziffer 5 bezeichnet. Gemäß Fig. 4 sind die Halteeinrichtungen 5 in gleichmäßiger Beabstandung über den Umfang des kreisförmigen Befestigungsteils 4 verteilt angeordnet.

Fig. 5 zeigt ein im wesentlichen dachförmiges Befestigungsteil 4 mit zwei sich unter einem stumpfen Winkel schneidenden Hauptseiten, in welchen jeweils zwei Halteeinrichtungen 5 ausgebildet sind. Bereits jetzt sei erwähnt, daß mit Ausnahme der in Fig. 9 dargestellten Ausführungsform des Befestigungsteils 4 alle Halteeinrichtungen 5 einen engeren Einführbereich und daran anschließenden, sich erweiternden Abschnitt umfassen. Die Gestaltung der Halteeinrichtungen 5 ist so getroffen, daß die an den Außenkanten der Schrumpfbänder 1 ausgebildeten Befestigungseinrichtungen 2 in diesen Halteeinrichtungen 5 festgehalten werden, wenn sie einmal in dieselben hineingedrückt worden sind.

Das Befestigungsteil gemäß Fig. 6 weist zwischen zwei voneinander beabstandeten Halteeinrichtungen 5 einen gekrümmten Oberflächenabschnitt aus, welcher an die Umfangsgestalt eines Rohres oder rohrförmigen Kabelbündels oder dergleichen angepaßt ist.

Fig. 7 zeigt ein Befestigungsteil 4 in Gestalt eines Quadrates, wobei in jeder der vier Quadratseiten jeweils zwei Halteeinrichtungen 5 ausgebildet sind.

Fig. 8 zeigt ein Befestigungsteil 4, bei welchem zwei Halteeinrichtungen 5 in einander gegenüberliegenden Seiten ausgebildet sind, wobei eine zwischen den beiden Halteeinrichtungen 5 liegende Außenkante eine Krümmung ähnlich Fig. 6 aufweist, um auf diese Weise eine Anpassung des Befestigungsteils 4 an einen im Querschnitt kreisförmigen bzw. halbkreisförmigen Gegenstand zu gestatten.

Fig. 9 zeigt ein nicht erfindungsgemäßes Befestigungsteil 4, welches sich dadurch auszeichnet, daß an zwei einander gegenüberliegenden Seiten im Querschnitt rinnenförmige Halteeinrichtungen 5 vorgesehen sind. Zwischen diesen beiden einander gegenüberliegenden Halteeinrichtungen 5 ist ein gewölbter Oberflächenabschnitt vorgesehen.

Die Figuren 10 bis 13 veranschaulichen schematisch bevorzugte Befestigungsmöglichkeiten für die Befestigungsteile 4. Wie bereits erwähnt, sollen die Befestigungsteile an einem gewünschten Ort dauerhaft befestigt werden. Eine solche Befestigung kann gemäß Fig. 10 dadurch erfolgen, daß der dort dick schwarz bezeichnete Bereich auf einer geeigneten Unterfläche geklebt wird. Gemäß Fig. 11 sind zwei einander gegenüberliegende seitliche Stege 6 vorgesehen, mit deren Hilfe das Befestigungsteil 4 formschlüssig befestigbar ist. Gemäß Fig. 12 ist zwischen zwei Halteeinrichtungen 5 eine Gewindebohrung 7 vorgesehen, mit deren Hilfe das Befestigungsteil an einem gewünschten Ort angeschraubt werden kann. Es versteht sich, daß auch eine Bohrung ohne Gewinde vorgesehen sein kann. Gemäß Fig. 13 ist an der den Halteeinrichtungen 5 gegenüberliegenden Außenseite des Befestigungsteils 4 ein Clip 8 vorgesehen, der in eine geeignete Aufnahme hineingedrückt werden kann, um das Befestigungsteil 4 ortsfest zu verankern.

Alle Befestigungsteile 4 sind so ausgebildet, daß sie bei der das Schrumpfen des Schrumpfbandes 1 hervorrufenden Wärmebehandlung nur geringfügig erwärmt werden. Die in ihren Halteeinrichtungen 5 aufgenommenen Befestigungseinrichtungen 2 sind in diesen Aufnahmen vor unerwünschten Temperaturen geschützt, so daß nicht die Gefahr besteht, daß die als Befestigungseinrichtungen 2 ausgebildeten Außenkanten der Schrumpfbänder 1 erweichen.

Beispielsweise beträgt die Wandstärke der Schrumpfbänder vor dem Schrumpfprozeß ca. 0,2 bis 0,8 mm. Die Befestigungsteile 4 hingegen haben im Mittel eine Wandstärke von ca. 3 mm.

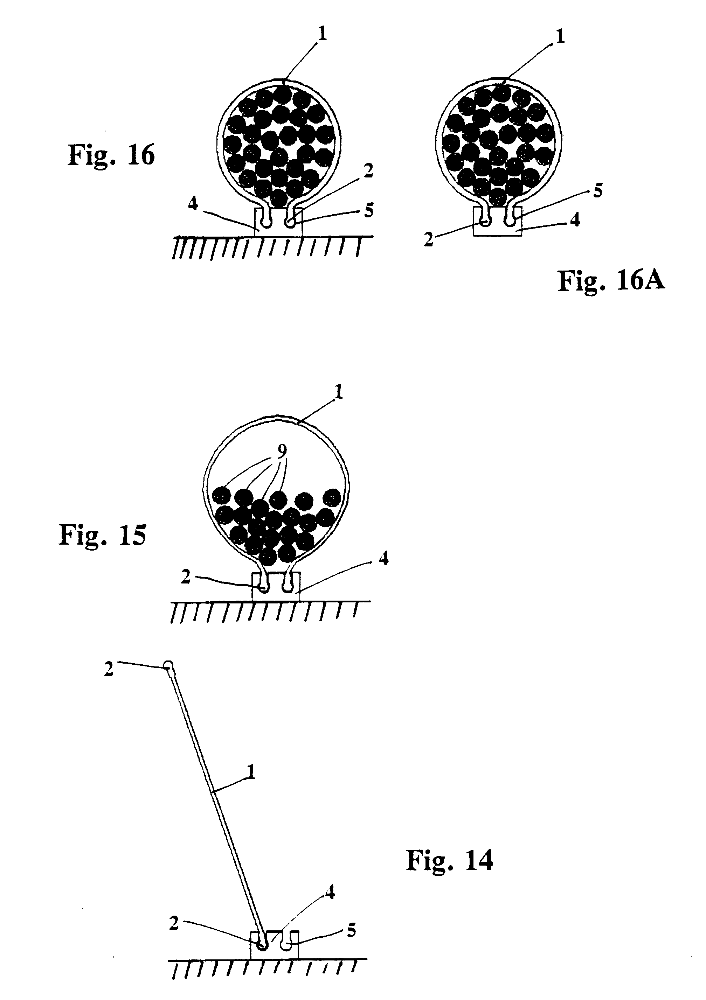

Aus dem Vorstehenden geht hervor, daß der Bausatz nach der Erfindung ein in seinen beiden Außenkanten mit Befestigungseinrichtungen 2 versehenes Schrumpfband 1 sowie ein Befestigungsteil 4 mit wenigstens einer daran ausgebildeten Halteeinrichtung 5 umfaßt. Im folgenden werden anhand der Figuren 14 bis 20 einige bevorzugte Anwendungsmöglichkeiten des Bausatzes nach der Erfindung beschrieben.

Fig. 14 zeigt ein an einer Wandung, wie der Wandung einer Schalttafel befestigtes Befestigungsteil 4, wobei eine der beiden Befestigungseinrichtungen 2 eines Schrumpfbandes 1 in einer der beiden Halteeinrichtungen 5 des Befestigungsteils 4 aufgenommen ist. Das Befestigungsteil 4 ist beispielsweise mit Hilfe eines nicht dargestellten Klebestreifens an der Wandung befestigt. Wie in Fig. 15 dargestellt, wird eine Vielzahl von Leitern 9 von dem Schrumpfband 1 umschlungen, welches auch mit seiner zweiten Außenkante, d.h. mit der an der zweiten Außenkante ausgebildeten Befestigungseinrichtung 2 des Schrumpfbandes 1 in der zweiten Halteeinrichtung 5 des bereits in Fig. 14 dargestellten Befestigungsteils 4 befestigt ist. Im Regelfall werden zunächst die Leiter 9 verlegt, und wird das Schrumpfband 1 an den an gewünschten Orten befestigten Befestigungsteilen 4 befestigt.

Im Anschluß an die in Fig. 15 erreichte Zwischenanordnung wird das Schrumpfband durch Wärmezufuhr geschrumpft, wodurch die in Fig. 16 schematisch dargestellte Anordnung erhalten wird. In dieser Anordnung sind die Leiter 9 eng von dem geschrumpften Schrumpfband umschlungen, dessen beide einander gegenüberliegende Außenkanten in den dafür vorgesehenen Halteeinrichtungen 5 des Befestigungsteils 4 gehalten sind.

Fig. 16A zeigt im Prinzip die gleiche Anordnung wie in Fig. 16. Die Anordnung gemäß Fig. 16A kann an einem beliebigen, als zweckmäßig erachteten Ort befestigt werden. Es sei unterstrichen, daß in der Gesamtheit der dieser Erfindungsbeschreibung beigefügten Figuren nicht jede der Halteeinrichtungen 5 bzw. jede der Befestigungseinrichtungen 2 eigens bezeichnet ist. Häufig ist nur eines der entsprechenden Teile mit dem zugehörigen Bezugszeichen versehen, um nicht die Übersichtlichkeit der Zeichnungen zu gefährden.

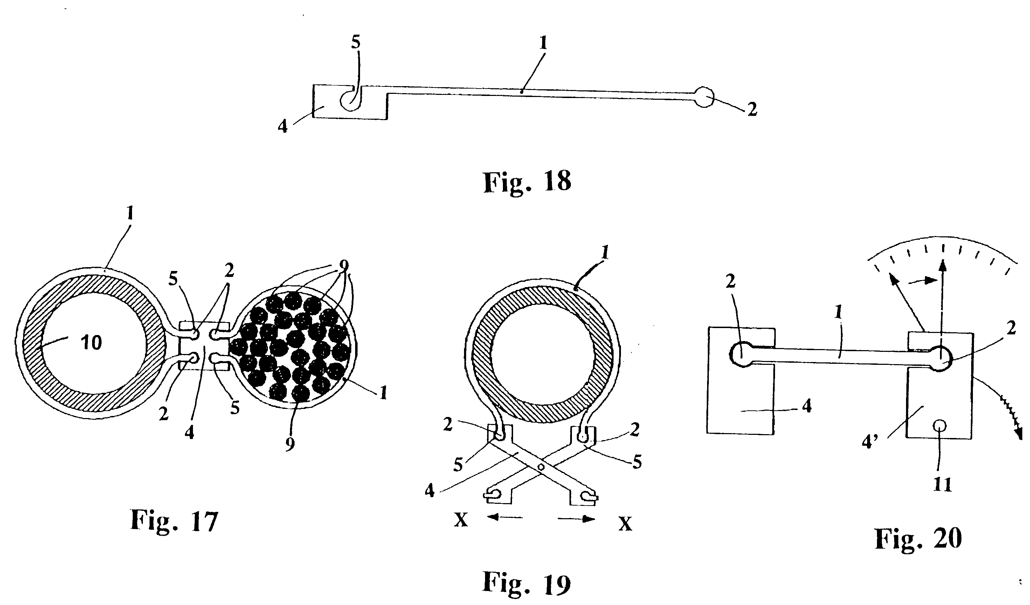

Fig. 17 zeigt ein Befestigungsteil 4 mit vier darin paarweise ausgebildeten Halteeinrichtungen 5. Auf der linken Seite des Befestigungsteils 4 ist ein Rohr 10 straff von einem herumgeschrumpften Schrumpfband 1 umgeben, dessen einander gegenüberliegenden Kanten mit Hilfe von Befestigungseinrichtungen 2 in zwei der Halteeinrichtungen 5 befestigt sind. Auf der rechten Seite des Befestigungsteils 4 ist eine Vielzahl von Leitern 9 (nur einige wenige sind mit dem Bezugszeichen 9 versehen) eng von einem geschrumpften Schrumpfband 1 umgeben, dessen einander gegenüberliegende Außenkanten mit Hilfe der darin ausgebildeten Befestigungseinrichtungen 2 in den beiden übrigen Halteeinrichtungen 5 des Befestigungsteiles 4 verankert sind.

Wird das Doppelschrumpfband gemäß Fig. 1B an seinen beiden gegenüberliegenden Seiten mit jeweils einem Befestigungsteil 4 verbunden, so ergeben sich zwei einander gegenüberliegende Kabelkanäle, jeweils zwischen dem oberen Schrumpfband 1 und dem unteren Schrumpfband 1', getrennt voneinander durch die mittlere Verdickung 3'.

Wenngleich in keiner der Figuren dargestellt, sei erwähnt, daß aus einer Vielzahl von Schrumpfbändern 1 durch Zwischenfügung jeweils eines Befestigungsteils 4 eine Vielzahl von Schrumpfbändern und eine Vielzahl von Befestigungsteilen zu einer abmessungsmäßig beliebig großen Einheit zusammengefügt werden können.

Fig. 18 zeigt eine spezielle Ausführungsform der Erfindung, welche sich dadurch auszeichnet, daß das Schrumpfband 1 und das Befestigungsteil 4 einstückig miteinander ausgebildet sind. Bei der Ausführungsform gemäß Fig. 18 ist vorgesehen, daß die rechtsseitig dargestellte Befestigungseinrichtung 2 mit der im Befestigungsteil 4 vorgesehenen (einzigen) Halteeinrichtung 5 in Eingriff gebracht wird. Damit schließt sich sozusagen das Schrumpfband 1 gemäß Fig. 18 in sich selber. Soll der Bausatz gemäß Fig. 18 benutzt werden, so wird das Befestigungsteil 4 auf beliebige Weise an einem gewünschten Orte befestigt und wird wenigstens ein Leiter oder ein Rohr oder irgend ein anderes gewünschtes Gebilde von dem Schrumpfband 1 umschlungen, worauf dessen Befestigungsteil 2 in die Halteeinrichtung 5 hineingeführt wird. Nachfolgend wird das Schrumpfband durch Wärmezufuhr geschrumpft, worauf die in Fig. 18 nicht dargestellten Leiter oder dergleichen eng von dem geschrumpften Schrumpfband umschlossen werden, dessen gegenüberliegende Kanten mit Hilfe des Befestigungsteils 4 festgehalten sind.

In Fig. 19 ist eine spezielle Ausführungsform des erfindungsgemäßen Bausatzes dargestellt, welche sich dadurch auszeichnet, daß das Befestigungsteil 4 aus zwei Hebel besteht, die in ihren Mittelpunkten gelenkig miteinander verbunden sind, etwa wie eine Schere. Wird ein Schrumpfband 1 mit an den gegenüberliegenden Kanten vorgesehenen Befestigungseinrichtungen 2 in den beiden Halteeinrichtungen 5 befestigt, die an den beiden dem Schrumpfband zugewandten Enden der beiden gelenkig miteinander verbundenen Hebel vorgesehen sind, und wird ein solches Gebilde durch Wärmezufuhr einem Schrumpfprozeß unterworfen, so führt das Schrumpfen des Schrumpfbandes 1 dazu, daß auf die beiden mit den Befestigungseinrichtungen 2 in Eingriff stehenden Enden der beiden beweglich miteinander verbundenen Hebel eine Zugkraft ausgeübt wird, die dazu führt, daß die jeweils gegenüberliegenden Endbereiche der Hebel in Richtung der beiden Pfeile X bewegt werden. Auf diese Weise läßt sich das Befestigungsteil 4 gemäß Fig. 19 sehr gut vorspannen.

In Fig. 20 ist eine Ausführungsform des erfindungsgemäßen Bausatzes dargestellt, bei welcher ein Schrumpfband 1 mit seiner linksseitigen Befestigungseinrichtung 2 in einem ersten Befestigungsteil 4 (mit Hilfe einer nicht näher dargestellten Halteeinrichtung 5) befestigt ist und bei welcher die rechtsseitige Befestigungseinrichtung 2 des Schrumpfbandes 1 in einem zweiten Befestigungsteil 4' mit Hilfe einer bereits beschriebenen Halteeinrichtung 5 (nicht mit einem Bezugszeichen versehen) befestigt ist. Wird das in Fig. 20 dargestellte Schrumpfband 1 einem Schrumpfungsprozeß unterworfen, so wird auf die beiden Befestigungsteile 4, 4' eine Kraft ausgeübt, welche bestrebt ist, die beiden Befestigungsteile 4, 4' aufeinander zu zu bewegen. Wird z.B. das linksseitige Befestigungsteil 4 ortsfest gehalten, so wird auf das rechtsseitige Befestigungsteil 4' eine beträchtliche Kraft ausgeübt, wie schematisch mittels einer angedeuteten Meßeinrichtung dargestellt. Wird das rechtsseitige Befestigungsteil 4' außermittig verschwenkbar gehaltert, wie mit Hilfe eines Schwenkzapfens 11, so vermag das rechtsseitige Befestigungsteil 4' als Folge des Schrumpfvorganges des Schrumpfbandes 1 eine Verschwenkungsbewegung in Schrumpfrichtung des Bandes 1 auszuführen.

## Patentansprüche

1. Bausatz zum Befestigen von Verdrahtungssystemen und Leiterbündeln mit einem schrumpffähigen Kunststoffband und einem Befestigungsteil, welches dauerhaft an einem gewünschten Ort befestigbar ist, **dadurch gekennzeichnet, daß** bei dem
- schrumpffähigen Kunststoffband (1) die einander gegenüberliegenden, verstärkten und profilierten Außenkanten als Befestigungseinrichtungen (2) ausgebildet sind, welche sich durchgehend oder intermittierend längs einer oder beider Außenkanten des schrumpffähigen Bandes erstrecken, und daß
- an dem Befestigungsteil (4) die Befestigungseinrichtungen (2) beider Außenkanten des schrumpffähigen Kunststoffbandes (1) befestigbar sind,
wobei in dem Befestigungsteil (4) wenigstens zwei zur Befestigungsteil-Oberfläche offene Ausnehmungen als Halteeinrichtungen (5) ausgebildet sind, deren Eingangsbereich querschnittsmäßig verengt ist, so daß in jede der Halteeinrichtungen (5) eine Befestigungseinrichtung (2) des schrumpffähigen Bandes (1) einführbar und klemmend festhaltbar ist.

2. Bausatz zum Befestigen von Verdrahtungssystemen und Leiterbündeln mit einem schrumpffähigen Kunststoffband und einem Befestigungsteil, welches dauerhaft an einem gewünschten Ort befestigbar ist, **dadurch gekennzeichnet, daß** von dem
- schrumpffähigen Kunststoffband (1) eine der einander gegenüberliegenden Außenkanten in verstärkter und profilierter Form als Befestigungseinrichtung (2) ausgebildet ist, welche sich durchgehend oder intermittierend längs der Außenkante des schrumpffähigen Bandes erstreckt, und daß
- an dem Befestigungsteil (4) die Befestigungseinrichtung (2) der einen Außenkante des schrumpffähigen Kunststoffbandes (1) befestigbar ist, während die andere Außenkante integral mit dem Befestigungsteil (4) verbunden ist,
wobei in dem Befestigungsteil (4) eine zur Befestigungsteil-Oberfläche offene Ausnehmung als Halteeinrichtung (5) ausgebildet ist, deren Eingangsbereich querschnittsmäßig verengt ist, so daß in der Halteeinrichtung (5) die Befestigungseinrichtung (2) des schrumpffähigen Bandes (1) einführbar und klemmend festhaltbar ist.

3. Bausatz nach Anspruch 1, **dadurch gekennzeichnet, daß** die Halteeinrichtungen (5) in Außenkanten von Befestigungsteilen (4) unterschiedlicher Förmgestalt ausgebildet sind.

4. Bausatz nach Anspruch 1 oder 2, **dadurch gekennzeichnet, daß** das Befestigungsteil (4) wenigstens ein verschwenkbares Glied aufweist.

5. Bausatz nach Anspruch 3, **dadurch gekennzeichnet, daß** der Bausatz (4) zwei wie eine Schere verschwenkbar miteinander verbundene Hebel aufweist und daß je eine Halteeinrichtung (5) in jedem vorderen Hebelende ausgebildet ist, wohingegen die gegenüberliegenden hinteren Hebelenden mit Befestigungsmitteln verbindbar sind.

6. Bausatz nach wenigstens einem der vorhergehenden Patentansprüche, **dadurch gekennzeichnet, daß** das schrumpffähige Band als zwei parallele Elemente umfassendes Doppelband (1, 1') ausgebildet ist, wobei die beiden parallelen Elemente mit Hilfe einer mittleren Verdickung (3') miteinander verbunden sind.

7. Bausatz nach einem der vorhergehenden Ansprüche, **dadurch gekennzeichnet, daß** das schrumpffähige Band (1) und die in dessen Außenkanten ausgebildeten Befestigungseinrichtungen (2) aus ein und demselben Werkstoff bestehen.

8. Bausatz nach einem der Ansprüche 1 bis 5, **dadurch gekennzeichnet, daß** wenigstens eine der in den Außenkanten des schrumpffähigen Bandes ausgebildeten Befestigungseinrichtungen (2) aus einem Werkstoff besteht, der verschieden ist vom Werkstoff des schrumpffähigen Bandes und der an der anderen Außenkante ausgebildeten Befestigungseinrichtung.

## Claims

1. Kit for fastening wiring systems and conductor bundles using a shrinkable plastic strap and a fastening part that can be permanently fastened to a desired point, **characterized in that**
- in the case of the shrinkable plastic strap (1), the mutually opposite, reinforced and profiled outer edges are formed as fastening devices (2) that extend continuously or intermittently along one or both outside edges of the shrinkable strap, and in that
- the fastening devices (2) of the two outside edges of the shrinkable plastic strap (1) can be fastened to the fastening part (4),
wherein there are formed in the fastening part (4) as retaining devices (5) at least two recesses that are open towards the surface of the fastening part and whose entry region is narrowed in cross section so that a fastening device (2) of the shrinkable strap (1) can be introduced into each of the retaining devices (5) and can be held firmly in a clamping manner.

2. Kit for fastening wiring systems and conductor bundles using a shrinkable plastic strap and a fastening part that can be permanently fastened to a desired point, **characterized in that**
- of the shrinkable plastic strap (1), one of the mutually opposite outside edges is formed in reinforced and profiled form as fastening device (2) that extends continuously or intermittently along the outside edge of the shrinkable strap, and in that
- the fastening device (2) of the one outside edge of the shrinkable plastic strap (1) can be fastened to the fastening part (4), whereas the other outside edge is integral with the fastening part (4),
wherein there is formed in the fastening part (4) as retaining device (5) a recess that is open towards the surface of the fastening part and whose entry region is narrowed in cross section so that the fastening device (2) of the shrinkable strap (1) can be introduced into the retaining device (5) and be firmly held in a clamping manner.

3. Kit according to Claim 1, **characterized in that** the retaining devices (5) are formed in outside edges of fastening parts (4) of various shapes.

4. Kit according to Claim 1 or 2, **characterized in that** the fastening part (4) has at least one swivellable member.

5. Kit according to Claim 3, **characterized in that** the kit (4) has two arms that are swivellably joined together like scissors and in that a retaining device (5) is formed in the front end of each arm, whereas the opposite rear end of the arms can be joined to fastening means.

6. Kit according to at least one of the preceding patent claims, **characterized in that** the shrinkable strap is formed as a double strap (1, 1') comprising two parallel elements, wherein the two parallel elements are joined together with the aid of a central thickened section (3').

7. Kit according to one of the preceding claims, **characterized in that** the shrinkable strap (1) and the fastening devices (2) formed in its outside edges are composed of one and the same material.

8. Kit according to one of Claims 1 to 5, **characterized in that** at least one of the fastening devices (2) formed in the outside edges of the shrinkable strap is composed of a material that is different from the material of the shrinkable strap and of the fastening device formed at the other outside edge.

## Revendications

1. Jeu de pièces pour la fixation de systèmes de câblage et de faisceaux de conducteurs, comprenant un ruban rétractable en matière plastique et une pièce de fixation qui peut être fixée durablement à un endroit souhaité, **caractérisé en ce que** :
◆ en ce que, dans le ruban rétractable en matière plastique (1), les bords extérieurs mutuellement opposés, renflés et profilés, sont réalisés sous la forme de dispositifs de fixation (2) qui s'étendent de façon ininterrompue ou intermittente le long d'un ou des deux bords extérieurs du ruban rétractable, et
◆ en ce que les dispositifs de fixation (2) des deux bords extérieurs du ruban rétractable en matière plastique (1) peuvent être fixés à la pièce de fixation (4),
◆ cependant que, dans la pièce de fixation (4), sont formés au moins deux évidements qui s'ouvrent sur la surface de la pièce de fixation, en constituant des dispositifs de retenue (5) dont la région d'entrée est rétrécie en section de telle manière qu'un dispositif de fixation (2) du ruban rétractable (1) puisse être engagé et retenu avec un effet de coincement dans chacun des dispositifs de retenue (5).

2. Jeu de pièces pour la fixation de systèmes de câblage et faisceaux de conducteurs, comprenant un ruban rétractable en matière plastique et une pièce de fixation qui peut être fixée durablement à un endroit souhaité, caractérisé :
◆ en ce que, sur le ruban rétractable en matière plastique (1), un des bords extérieurs mutuellement opposés, possédant une forme renflée et profilée, constitue un dispositif de fixation (2) qui s'étend de façon ininterrompue ou par intermittence le long du bord extérieur du ruban rétractable, et
◆ le dispositif de fixation (2) de l'un des bords extérieurs du ruban rétractable en matière plastique (1) peut être fixé à la pièce de fixation (4), tandis que l'autre bord extérieur est réuni à la pièce de fixation (4) en une seule pièce,
◆ cependant que, dans la pièce de fixation (4), est formé, comme dispositif de retenue (5), un évidement qui s'ouvre sur la surface de la pièce de fixation, dont la région d'entrée est rétrécie en section de telle manière que le dispositif de fixation (2) du ruban rétractable (1) puisse être engagé dans le dispositif de retenue (5) et y être retenu avec effet de coincement.

3. Jeu de pièces selon la revendication 1, **caractérisé en ce que** des dispositifs de retenue (5) sont formés dans les bords extérieurs de pièces de fixation (4) présentant des formes diverses.

4. Jeu de pièces selon la revendication 1 ou 2, **caractérisé en ce que** la pièce de fixation (4) présente au moins un élément pivotant.

5. Jeu de pièces selon la revendication 3, **caractérisé en ce que** le jeu de pièces (4) présente deux leviers réunis l'un à l'autre de façon à pouvoir pivoter comme des ciseaux et en ce qu'un dispositif de retenue (5) est formé dans chacune des extrémités avant des leviers, tandis que les extrémités arrière opposées des leviers peuvent être assemblées à des moyens de fixation.

6. Jeu de pièces selon au moins une des revendications précédentes, **caractérisé en ce que** le ruban rétractable est constitué par un ruban double (1, 1') comprenant deux éléments parallèles, les deux éléments parallèles étant réunis l'un à l'autre à l'aide d'un épaississement médian (3').

7. Jeu de pièces selon l'une des revendications précédentes, **caractérisé en ce que** le ruban rétractable (1) et les dispositifs de fixation (2) formés dans ses bords extérieurs sont composés d'une seule et même matière.

8. Jeu de pièces selon l'une des revendications 1 à 5, **caractérisé en ce qu'**au moins un des dispositifs de fixation (2) formés dans les bords extérieurs du ruban rétractable est composé d'une matière qui est différente de la matière du ruban rétractable et de celle du dispositif de fixation formé à l'autre bord extérieur.
